# EUROPÄISCHE PATENTSCHRIFT

(11) **EP 0 360 982 B1**
(45) Veröffentlichungstag und Bekanntmachung des Hinweises auf die Patenterteilung: **05.05.1993**
(21) Anmeldenummer: 89111084.3
(22) Anmeldetag: 19.06.1989
(51) Int. Cl.: C05G 3/00, C05F 11/00

(54) **Mischstoff für eine Düngemittelmischung oder dergleichen**
Component used for a fertilizer mixture or such like
Additif pour mélange d'engrais ou mélanges similaires

(30) Priorität: 27.09.1988 DE 3833178
(43) Veröffentlichungstag der Anmeldung: 04.04.1990
(73) Patentinhaber: Priehs, Friedrich, 28832 Achim (DE)
(72) Erfinder: Priehs, Friedrich, 28832 Achim (DE)
(74) Vertreter: Gramm, Werner, Prof., Dipl.-Ing.

(56) Entgegenhaltungen:
- WO-A-80/01803
- BE-A- 504 155
- CH-A- 543 461
- GB-A- 1 380 865
- US-A- 3 269 824
- US-A- 4 201 128
- US-A- 4 369 054
- CHEMICAL ABSTRACTS, vol. 88, no. 25, 19 Juni 1978 Columbus, Ohio, USA, S. 637, no. 189145g.

## Beschreibung

Die Erfindung betrifft einen Mischstoff für eine organische und/- oder anorganische Düngemittelmischung o. dgl.

Der Erfindung liegt die Aufgabe zugrunde, einen Mischstoff zu entwickeln, der sich insbesondere als Dünger- und Saatträger verwenden läßt.

Diese Aufgabe wird erfindungsgemäß gelöst durch ein Papierschaum-Granulat, hergestellt aus einer Mischung von trocken verfasertem und ggf. noch fein vermahlenem Altpapier und/oder Pappe und Biopolymeren, wobei diese Mischung einem Extruder zugeführt, im Extruder verdichtet und plastifiziert wird und beim Extruderaustritt zu Papierschaum expandiert bzw. aufschäumt.

Der erfindungsgemäße Mischstoff besteht zu nahezu 100 % aus organischen Stoffen und löst sich mit zunehmender Feuchtigkeitsaufnahme schnell wieder in seine Hauptbestandteile Stärke und Zellulose auf.

Wird bei Herstellung des Mischstoffes dem Gemisch aus Altpapier und/oder Pappe und Biopolymeren ein Düngerkonzentrat zugesetzt, so löst sich das Dünger-Trägermaterial nach dem Ausbringen auf den Acker mit zunehmender Feuchtigkeit langsam auf und gibt dabei den zugefügten Dünger in der für das Wachstum der jeweiligen Pflanzen angestrebten optimalen Dosierung frei. Durch dosierte Hinzugabe von trockenem Altpapier läßt sich dieser Vorgang so steuern, daß der Zerfall nur langsam eintritt. Durch unterschiedliche Zusammensetzungen des Pulpe-Papier-Düngergemisches läßt sich die Wirkungsweise über unterschiedliche, dem Pflanzenwuchs angepaßte Zeiträume einstellen, so daß sich Kurz-, Mittel- oder Langzeitdünger ergeben.

Vorteilhaft sind die sehr einfache und preiswerte Verarbeitung sowie die Verringerung der Bodenbelastung durch Düngechemikalien sowie die Steuerung der dem Pflanzenwuchs angepaßten Nährstoff/ Düngeabgabe. Dabei braucht das granulierte Dünger/Trägermaterial nicht über die ganze Ackerfläche verteilt zu werden, sondern kann gezielt und dosiert direkt neben den Pflanzen abgelegt werden, was zu einer weiteren Kosteneinsparung führt (Sensoren- bzw. Detektorentechnik).

Biopolymere ist eine Sammelbezeichnung für die am Aufbau der Lebewesen beteiligten Polymeren, wie z. B. Eiweißstoffe, Nucleinsäuren, Polysaccharide. Im vorliegenden Fall handelt es sich insbesondere um plastifizierbare abgebaute Stärken, Mehlmischungen mit hohem Stärkeanteil, Proteine oder Pulpe. Pulpe fällt bei der Herstellung von Stärke, insbesondere bei der Kartoffelstärkegewinnung in großen Mengen an und ist sehr preiswert.

Der neue Mischstoff läßt sich erfindungsgemäß auch als Trägermaterial zum "Verkapseln" von Saatgut verwenden. Als Vorteil ergibt sich u. a., daß das Saatgut dann ggf. nicht mehr gegen Krähen- und Vogelfraß schützend gebeizt werden muß.

Der erfindungsgemäße Mischstoff ist stark hygroskopisch und eignet sich aufgrund dieser extrem hohen Feuchtigkeitsaufnahme somit auch zum Eindicken von Klärschlämmen, Gülle, Väkalien o.dergl.. Die so vermengten Materialien lassen sich mit wesentlich geringe rer Geruchsbelästigung preiswerter transportieren, lagern (ggf. auch Deponielagerung) und verarbeiten.

Der Mengenanteil Altpapier mit Zuschlagstoff (= Papierschaum) hängt wesentlich von den je nach Einsatz- und Verwendungsbereich angestrebten unterschiedlichen Auflösungs- und Zersetzungszeiten sowie den individuellen Nährstoffbedürfnissen der verschiedenen Pflanzenarten und den beabsichtigten Ausstreumengen ab. Hieraus ergibt sich dann eine Granulatgröße im Bereich von 5 bis 10 mm Durchmesser.

Die organischen und/oder anorganischen Düngerkonzentrate werden in fester, flüssiger oder granulierter Form durch wägende Dosierung dem Extruder zugeführt.

Bei Verwendung des erfindungsgemäßen Mischstoffs als Trägermaterial für Saatgut erfolgt die Zuführung der verschiedenen Samenkörner nach dem Extrusionsprozeß. Dabei werden die Samenkörner in den extrudierten Papierschaumteppich eingedrückt und dadurch verkapselt bzw. konserviert und anschließend exakt auf Einzel-oder Mehrfachkorngröße granuliert.

Ggf. ist eine anschließende Trocknung des Samen- bzw. Düngerträgers erforderlich.

## Patentansprüche

1. Mischstoff für eine organische und/oder anorganische Düngemittelmischung o. dgl., gekennzeichnet durch ein Papierschaum-Granulat, hergestellt aus einer Mischung von trocken verfasertem und ggf. noch fein vermahlenem Altpapier und/oder Pappe und Biopolymeren, wobei diese Mischung einem Extruder zugeführt, im Extruder verdichtet und plastifiziert wird und beim Extruderaustritt zu Papierschaum expandiert bzw. aufschäumt.

2. Mischstoff nach Anspruch 1, dadurch gekennzeichnet, daß die Biopolymere plastifizierbare abgebaute Stärken, Mehlmischungen mit hohem Stärkeanteil, Proteine oder Pulpe sind.

3. Mischstoff nach Anspruch 1 oder 1, gekennzeichnet durch der Mischung aus vermahlenem Altpapier und/oder Pappe und Biopolymeren zugegebene Düngerkonzentrate.

4. Verwendung eines Mischstoffs nach Anspruch 1, 2 oder 3 als Trägermaterial für Saatgut.

5. Verwendung eines Mischstoffs nach Anspruch 1, 2 oder 3 als Eindickmittel für Klärschlämme, Gülle, Fäkalien o. dgl.

## Claims

1. Mixing component for an organic and/or inorganic fertilizer mixture or the like, characterized by paper foam granules, produced from a mixture of used paper which is made fibrous in the dry state and if necessary is finely ground, and/or card and biopolymers, this mixture being supplied to an extruder, compressed and plasticized in the extruder, and on leaving the extruder being expanded and foamed to give a paper foam.

2. Mixing component according to Claim 1, characterized in that the biopolymers are plasticizable degraded starches, flour mixtures with a high starch content, proteins or pulps.

3. Mixing component according to Claim 1 or 2, characterized by manure concentrates added to the mixture comprising ground used paper and/or card and biopolymers.

4. Use of a mixing component according to Claim 1, 2 or 3 as a carrier material for seed.

5. Use of a mixing component according to Claim 1, 2 or 3 as a thickener for sewage sludge, liquid manure, faecal matter or the like.

## Revendications

1. Composition pour un mélange organique et/ou inorganique d'engrais ou analogue, caractérisée par un granulé de mousse de papier réalisé à partir d'un mélange de papier usagé et/ou de carton mis sous forme de fibres à sec et le cas échéant encore finement broyé, et de biopolymères, ce mélange étant amené à une extrudeuse, comprimé et plastifié dans l'extrudeuse, et expansé ou mis sous forme de mousse et transformé en mousse de papier à la sortie de l'extrudeuse.

2. Composition conforme à la revendication 1, caractérisée en ce que les biopolymères sont des amidons décomposés plastifiables, des mélanges de farines à forte teneur en amidons, des protéines ou de la pulpe.

3. Composition conforme à l'une des revendications 1 ou 2, caractérisée par des concentrés d'engrais ajoutés au mélange de papier usagé et/ou de carton broyé et de biopolymères.

4. Utilisation d'une composition conforme à l'une des revendications 1, 2 ou 3, comme matériau support de semences.

5. Utilisation d'une composition conforme à l'une des revendications 1, 2 ou 3, comme épaississant de boues d'épuration, de lisier, de matières fécales et analogues.
